# EUROPÄISCHE PATENTANMELDUNG

(11) **EP 3 964 858 A1**
(43) Veröffentlichungstag der Anmeldung: **09.03.2022**
(21) Anmeldenummer: 21189223.7
(22) Anmeldetag: 02.08.2021
(51) Int. Cl.: G01S 7/48, G01S 7/481, G01S 17/42, G01S 17/89, G01D 5/20, H04B 5/00, H01F 38/18

(54) **ERFASSUNG VON OBJEKTEN IN EINEM ÜBERWACHUNGSBEREICH**

(30) Priorität: 04.09.2020 DE 102020123118
(71) Anmelder: SICK AG, 79183 Waldkirch (DE)
(72) Erfinder: Szerbakowski, Boris, 79183 Waldkirch (DE)

(57) **Zusammenfassung**

Es wird ein Sensor (10) zur Erfassung von Objekten in einem Überwachungsbereich (20) angegeben, mit mindestens einem Sender (22) zum Aussenden eines Sendesignals (26), mindestens einem Empfänger (34) zum Erzeugen eines Empfangssignals aus dem von den Objekten zurückgeworfenen Sendesignal (30), einer Sockeleinheit (14), einer gegenüber der Sockeleinheit (14) um eine Drehachse (18) beweglichen Abtasteinheit (12) zur periodischen Abtastung des Überwachungsbereichs (20) sowie einer Steuer- und Auswertungseinheit (56) zur Erfassung von Informationen über die Objekte anhand des Empfangssignals, wobei zwischen Sockeleinheit (14) und Abtasteinheit (12) eine drahtlose Datenübertragungseinheit (54a-b) und eine drahtlose Energieübertragungseinheit (44, 46) mit einer Einstelleinheit (48) für die zu übertragende Energie vorgesehen ist. Dabei weist die drahtlose Energieübertragungseinheit (44, 46) mindestens einen ersten Schwingkreis (44) in der Sockeleinheit (14) und mindestens eine Empfangsspule in der Abtasteinheit (12) zur resonanten Energieübertragung auf, und die Einstelleinheit (48) steht mittels der drahtlosen Datenübertragungseinheit (54a-b) in Kommunikationsverbindung mitderAbtasteinheit(12), um Energiedaten über die in derAbtasteinheit(12) verfügbare und/oder erforderliche übertragene Energie an die Einstelleinheit (48) zu übertragen und mit der Einstelleinheit (48) auf Basis der Energiedaten die Ansteuerfrequenz des ersten Schwingkreises (44) einzustellen.

## Beschreibung

Die Erfindung betrifft einen Sensor, insbesondere Laserscanner oder Radar, und ein Verfahren zur Erfassung von Objekten in einem Überwachungsbereich nach dem Oberbegriff von Anspruch 1 beziehungsweise 11.

In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder durch mehrere Antastungen desselben Objekts an verschieden Stellen dessen Kontur bestimmen. Die dritte Raumkoordinate kann durch mehrere unterschiedlich geneigte Abtastebenen oder eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Die Abtastung der Überwachungsebene in einem Laserscanner wird üblicherweise dadurch erreicht, dass der Sendestrahl auf einen rotierenden Drehspiegel trifft. Lichtsender, Lichtempfänger sowie zugehörige Elektronik und Optik sind im Gerät fest montiert und vollziehen die Drehbewegung nicht mit. Es ist auch bekannt, den Drehspiegel durch eine mitbewegte Abtasteinheit zu ersetzten. Beispielsweise rotiert in der DE 197 57 849 B4 der gesamte Messkopf mit Lichtsender und Lichtempfänger. Ein Radar arbeitet in einem ähnlichen Grundaufbau, wobei die Sender und Empfänger einen ganz anderen Frequenzbereich nutzen.

Die rotierenden elektronischen Komponenten müssen mit Energie versorgt werden. Um hier mechanische Abnutzung etwa eines Schleifkontakts zu vermeiden, wird eine drahtlose Versorgung angestrebt. Aufgrund der mechanischen Trennung zwischen statischer und rotierender Einheit entsteht notwendigerweise ein Luftspalt zwischen den beiden Einheiten, das Verfahren zur Energieübertragung muss also diesen Spalt überbrücken können.

Mit gutem Wirkungsgrad ist dies induktiv mittels der Sperrwandlertopologie (Flyback-Wandler) oder mit resonanten Wandlertopologien möglich. In einer Sperrwandlertopologie kann für eine Regelung der Übertragung der Spannungsverlauf an der sendeseitigen Übertragerspule gemessen werden, und auf diese Weise lässt sich ein weiter Leistungsbereich mit relativ gutem Wirkungsgrad abdecken. Laserscanner mit dieser Übertragungstechnik sind bekannt. Aufgrund des hochfrequenten Stromverlaufs ist jedoch eine gute elektrische Abschirmung um die Übertragereinheit notwendig, um die EMV-Emissionsgrenzwerte einhalten zu können. Das erhöht die bauliche Komplexität und die Herstellkosten.

Resonante Übertragungsverfahren werden bisher in unterschiedlichen Drahtlos-Ladeverfahren etwa nach dem QI-Standard, WiTricity und anderen angewandt. Dank des annähernd sinusförmigen Stromverlaufs ist es hier sehr viel einfacher, die EMV-Emissionsgrenzwerte einzuhalten. Allerdings ist eine primärseitige Regelung ungenau, denn eine Messung der primärseitigen Spulenspannung erlaubt nur sehr eingeschränkte Aussagen über die Ausgangsspannung auf der Sekundärseite. Durch sehr präzise gefertigte Übertragereinheiten mit geringem Luftspalt lässt sich dieses Problem vermindern, aber das treibt die durch einfacheren EMV-Schutz verringerten Herstellkosten doch wieder in die Höhe. Bei der resonanten Übertragung ist die sekundär entnehmbare Leistung maximal, wenn der Resonanzkreis bei seiner Resonanzfrequenz betrieben wird, und wird bei abweichender Ansteuerfrequenz reduziert. Unabhängig von der tatsächlich entnommenen Leistung steigen aber die Verluste im Resonanzkreis aufgrund zunehmender Blindströme bei Annäherung an die Resonanzfrequenz an. Der Wirkungsgrad ist also bei der Resonanzfrequenz keineswegs optimal. Herkömmlich spielt der Wirkungsgrad kaum eine Rolle, da resonante Übertragung zum Aufladen von Akkus eingesetzt wird, wo es nur auf die Ladezeit und damit eine maximal übertragene Leistung ankommt.

Die DE 10 2006 045 799 A1 offenbart einen abtastenden Laserabstandssensor mit Versorgung der Laserdioden durch induktive Kopplung. Die EP 2 388 619 A1 und die EP 1 975 571 B1 beschreiben jeweils einen Laserscanner mit einer berührungslosen Daten- und Energieübertragung zu dessen rotierendem Messkopf. Aus der EP 2 933 655 B1 ist ein Laserscanner bekannt, bei dem auf zwei gegeneinander rotierenden Leiterkarten einer feststehenden Sockeleinheit beziehungsweise beweglichen Abtasteinheit Komponenten für eine induktive Energieversorgung und eine kapazitive Datenübertragung untergebracht sind. Über Regelung und Wirkungsgrad der jeweiligen Versorgung machen diese Dokumente sich jedoch keine Gedanken.

Die noch unveröffentlichte deutsche Patentanmeldung mit dem Aktenzeichen 102019128928.9 befasst sich ebenfalls mit der induktiven Versorgung einer beweglichen Abtasteinheit eines gattungsgemäßen Sensors. Dabei werden segmentierte Ferrite verwendet, und dies führt zu Toleranzen des mechanischen Aufbaus und damit des Koppelfaktors, so dass die induktive Versorgung nicht mehr einfach mit statischen Einstellungen betrieben werden kann.

Es ist daher Aufgabe der Erfindung, die drahtlose Versorgung eines Sensors mit beweglicher Abtasteinheit zu verbessern.

Diese Aufgabe wird durch einen Sensor und ein Verfahren zur Erfassung von Objekten in einem Überwachungsbereich nach Anspruch 1 beziehungsweise 11 gelöst. Der Sensor weist mindestens einen Sender und mindestens einen Empfänger auf, um ein Sendesignal in den Überwachungsbereich auszusenden und ein entsprechendes Empfangssignal aus dem an Objekten zurückgeworfenen Sendesignal zu erzeugen und dieses auszuwerten, um Informationen über die Objekte zu gewinnen, insbesondere mit einem Lichtlaufzeitverfahren deren Abstände oder Konturen zu bestimmen. Der Sensor ist zweiteilig mit einer Sockeleinheit und einer dagegen um eine Drehachse beweglichen Abtasteinheit aufgebaut, die im Verlauf der Bewegung den Überwachungsbereich periodisch abtastet. Um die in der Abtasteinheit mitbewegten Komponenten zu versorgen, ist eine Energieübertragungseinheit zur drahtlosen Energieübertragung vorgesehen. Eine Einstelleinheit stellt die Energieübertragungseinheit entsprechend der zu übertragenden Energie ein. Weiterhin ist zwischen Sockeleinheit und Abtasteinheit auch eine drahtlose Datenübertragungseinheit vorgesehen. Während die Energieversorgung vorzugsweise nur in die Abtasteinheit hinein benötigt wird, kann die drahtlose Datenkommunikation auch bidirektional erfolgen.

Die Erfindung geht von dem Grundgedanken aus, eine resonante Energieübertragung einzusetzen. Dafür ist mindestens ein erster Schwingkreis in der Sockeleinheit und mindestens eine Empfangsspule in der Abtasteinheit vorgesehen. Die Empfangsspule ist vorzugsweise Teil eines zweiten Schwingkreises, andere Ausführungsformen beispielsweise mit Empfangsspule und Gleichrichter sind aber auch denkbar. Durch Änderung der Ansteuerfrequenz des ersten Schwingkreises kann die Einstelleinheit die übertragene Energie beziehungsweise Leistung variieren. Bei der Resonanzfrequenz wird die Übertragung maximiert, der Wirkungsgrad dagegen ist besser, wenn weniger Energie übertragen wird. Wie viel Energie tatsächlich sekundärseitig in der Abtasteinheit zur Verfügung steht, ist primärseitig in der Sockeleinheit nicht genau messbar. Deshalb wird die drahtlose Datenübertragung genutzt, um Energiedaten aus der Abtasteinheit in die Sockeleinheit zu übertragen. Dadurch hat die Einstelleinheit die Möglichkeit, die Ansteuerfrequenz genau einzustellen.

Die Erfindung hat zunächst die Vorteile einer berührungslosen Energieversorgung, die verschleißfrei ist. Von gattungsgemäßen Sensoren wird immer größere Leistungsfähigkeit bei möglichst geringer Baugröße gefordert. Durch die Erfindung wird eine besonders effiziente Energieübertragung mit gutem Wirkungsgrad erreicht und der Temperaturanstieg innerhalb des Gerätes gering gehalten, auch wenn der Leistungsbedarf etwa in unterschiedlichen Betriebsmodi oder durch Kompensation von Temperatureffekten variiert. Dabei wird eine maximal benötigte Leistung zuzüglich Reserven für eine ausreichende Versorgung bereitgestellt, und auch Lastsprünge verursachen keine Abschaltung wegen Unterspannung, weil ein erhöhter Bedarf regelmäßig vorab bekannt ist und vorrausschauend mehr Leistung bereitgestellt werden kann. Ein Energiespeicher zur Überbrückung von kurzzeitigen Einbrüchen ist denkbar, aber nicht erforderlich. Dies alles kann kostengünstig mit vergleichsweise einfachen Bauteilen ohne hohe Toleranzanforderungen oder aufwändige Abschirmmaßnahmen umgesetzt werden.

Der Sender ist vorzugsweise als Lichtsender und der Empfänger als Lichtempfänger ausgebildet. Der Sensor ist dann ein optoelektronischer Sensor, in bevorzugter Ausführungsform ein Laserscanner. Es ist denkbar, nicht nur eine Ebene, sondern in einem Mehrebenenscanner eine Vielzahl von Ebenen mit mehreren Strahlen abzutasten. Alternativ ist der Sensor ein Radar, wo dann entsprechend ein Radarsender und Radarempfänger im Spektrum der Radar- oder Mikrowellen zum Einsatz kommen. Die jeweiligen Sender und Empfänger sind vorzugsweise in der Abtasteinheit angeordnet, vollziehen also deren Bewegung um die Drehachse mit und werden über die Energieübertragungseinheit aus der Sockeleinheit versorgt.

Die Einstelleinheit ist bevorzugt in der Sockeleinheit angeordnet. Dort befindet sich auch der erste Schwingkreis, über dessen Ansteuerfrequenz die Energieübertragung eingestellt wird. Prinzipiell könnte die Einstelleinheit aber auch von der Abtasteinheit aus über die drahtlose Datenübertragungseinheit auf den ersten Schwingkreis einwirken.

Die Abtasteinheit weist bevorzugt eine Messeinheit für Kenngrößen der Energieübertragung auf, und die Energiedaten sind wenigstens teilweise aus den Kenngrößen erzeugt. Diese Kenngrößen sind insbesondere Spannung über oder Strom in der Empfangsspule beziehungsweise dem zweiten Schwingkreis. Entsprechende Messungen werden in der Abtasteinheit häufig ohnehin schon für andere Zwecke vorgenommen. Die Kenngrößen selbst oder daraus abgeleitete Größen werden mit den Energiedaten über die drahtlose Datenübertragungseinheit in die Sockeleinheit übermittelt.

Die Einstelleinheit ist bevorzugt als Regler ausgebildet, der die Ansteuerfrequenz anhand der Energiedaten regelt. Die Sollgröße wird aus der mit den Energiedaten übertragenen benötigten Energie in der Abtasteinheit oder einer sonstigen Vorgabe abgeleitet, beispielsweise entsprechend einem Betriebsmodus. Der Regler wirkt über eine Veränderung der Ansteuerfrequenz des ersten Schwingkreises auf die übertragene Energie ein und erhält Rückmeldung über die tatsächlich in der Abtasteinheit verfügbare Energie aus den mittels der drahtlosen Datenübertragungseinheit rückgemeldeten Energiedaten.

Die Einstelleinheit ist bevorzugt dafür ausgebildet, die Ansteuerfrequenz so einzustellen, dass eine Mindestversorgung der Abtasteinheit gewährleistet ist. Dieser Mindestversorgung wird bevorzugt noch eine Reserve zugeschlagen. Es wird aber keine maximale Energieübertragung angestrebt, sondern nur dafür gesorgt, dass die Mindestversorgung einschließlich einer etwaigen Reserve nicht unterschritten wird. Nochmals anders ausgedrückt wird auf einen Arbeitspunkt zwischen der Mindestversorgung und der maximal möglichen Energieübertragung geregelt.

Die Einstelleinheit ist bevorzugt dafür ausgebildet, die Ansteuerfrequenz für einen hohen Wirkungsgrad der Energieübertragung einzustellen. Im Gegensatz zu herkömmlichen Anwendungen zum Aufladen von Akkus wird der Wirkungsgrad und nicht die Leistungsübertragung maximiert. Wie einleitend bereits erwähnt, ist die Leistungsübertragung bei der Resonanzfrequenz maximal, der Wirkungsgrad jedoch ist besser, wenn die Ansteuerfrequenz von der Resonanzfrequenz abweicht und insbesondere geringer ist. Die Optimierung des Wirkungsgrades steht vorzugsweise unter der Bedingung, die Mindestversorgung nicht zu unterschreiten. Eine bevorzugte Einstellung sieht vor, nur geradeso die Mindestversorgung einschließlich einer etwaigen Reserve zu gewährleisten, womit ein Optimum aus ausreichender Versorgung bei maximal möglicher Effizienz erreicht wird.

Die Einstelleinheit ist bevorzugt für eine Anpassung der Ansteuerfrequenz in Zyklen von höchstens einigen Malen oder einmal pro Sekunde ausgebildet. Die Einstellung und insbesondere Regelung ist damit recht träge, aber das genügt in aller Regel für die Anforderungen. Es müssen nur selten Energiedaten übertragen werden, und im Vergleich mit den Messdaten wird auf diese Weise so gut wie keine zusätzliche Bandbreite der drahtlosen Datenübertragungseinheit beansprucht.

Die Einstelleinheit ist bevorzugt in einem digitalen Baustein der Steuer- und Auswertungseinheit implementiert. Da die Einstellung beziehungsweise Regelung langsam sein kann, werden dafür kaum Rechenkapazitäten benötigt, so dass dies einfach als zusätzliche Funktion der Steuer- und Auswertungseinheit umgesetzt werden kann, ohne dafür zusätzliche Hardwareressourcen bereitzustellen.

Die Steuer- und Auswertungseinheit ist bevorzugt dafür ausgebildet, der Einstelleinheit einen Moduswechsel des Sensors mitzuteilen, damit die Einstelleinheit daraufhin die für den neuen Modus erforderliche Energie bereitstellt. Größere Änderungen im Energiebedarf der Abtasteinheit ergeben sich regelmäßig nur dann, wenn der Sensor in einen neuen Modus umschaltet, beispielsweise Abtaststrahlen hinzukommen oderweggenommen werden oder mit einer anderen Reichweite gemessen werden soll. Derartige Umschaltungen sind meist im Voraus bekannt, so dass auch mit langsamen Zykluszeiten der Einstelleinheit rechtzeitig reagiert werden kann.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung durch einen Laserscanner; und
- Fig. 2: eine schematische Darstellung einer geregelten drahtlosen Energieübertragung mit einem induktiven Resonanzverfahren.

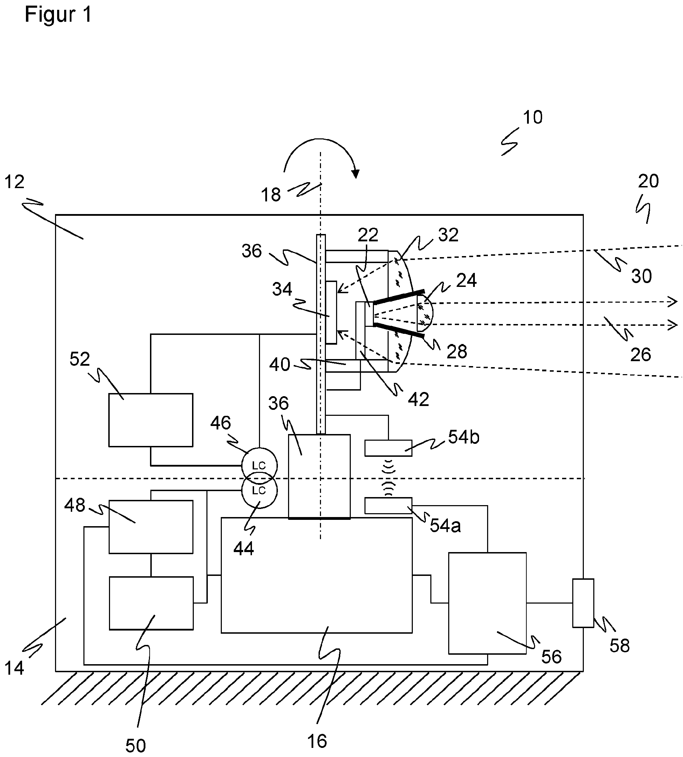

Figur 1 zeigt eine schematische Schnittdarstellung durch einen Laserscanner 10. Der Laserscanner 10 umfasst in grober Aufteilung eine bewegliche Abtasteinheit 12 und eine Sockeleinheit 14. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Abtasteinheit 12 in eine Drehbewegung um eine Drehachse 18 versetzt, um so einen Überwachungsbereich 20 periodisch abzutasten.

In der Abtasteinheit 12 erzeugt ein Lichtsender 22 mit Hilfe einer Sendeoptik 24 einen Sendelichtstrahl 26, der von einem Tubus 28 abgeschirmt in den Überwachungsbereich 20 ausgesandt wird. Trifft der Sendelichtstrahl 26 in dem Überwachungsbereich 20 auf ein Objekt, so kehrt ein entsprechender Lichtstrahl als remittiertes Licht 30 zu dem Laserscanner 10 zurück. Das remittierte Licht 30 wird von einer Empfangsoptik 32 auf einen Lichtempfänger 34 geführt und dort in ein elektrisches Empfangssignal gewandelt. Der Lichtempfänger 34 ist in dieser Ausführungsform auf einer Leiterkarte 36 angeordnet, die auf der Drehachse 18 liegt und mit der Welle 38 des Antriebs 16 verbunden ist. Die Empfangsoptik 32 stützt sich durch Beinchen 40 auf der Leiterkarte 36 ab und hält eine weitere Leiterkarte 42 des Lichtsenders 22. Die beiden Leiterkarten 36, 42 sind untereinander verbunden und können auch als gemeinsame Flexprint-Leiterkarte ausgebildet sein. Diese Leiterkarten 36, 42 sind nur Beispiele für eine Elektronik in der Abtasteinheit 12, die auch ganz anders ausgestaltet sein kann.

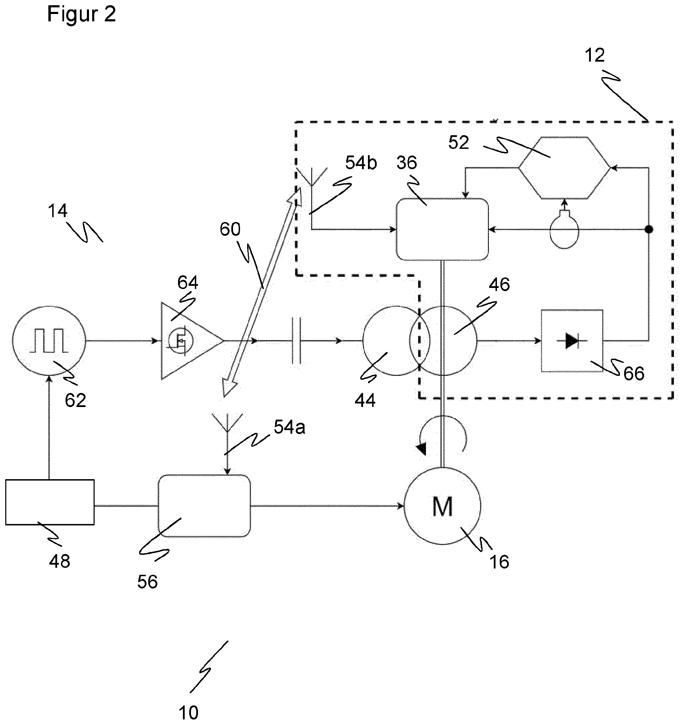

Der gezeigte Aufbau der Abtasteinheit 12 ist rein beispielhaft zu verstehen. Die Optiken 24, 32 können andere optische Elemente aufweisen, und auch der koaxiale Grundaufbau von Sendepfad und Empfangspfad kann variiert werden, beispielsweise biaxial sein. Der eigentliche Gegenstand der Erfindung ist eine gesteuerte oder geregelte kontaktlose Energieübertragungseinheit zur Übertragung von Energie von der Sockeleinheit 14 in die Abtasteinheit 12. Dafür ist in der Sockeleinheit 14 ein erster Schwingkreis 44 und in der Abtasteinheit 12 ein zweiter Schwingkreis 46 untergebracht, so dass durch ein resonantes induktives Verfahren Energie von dem ersten Schwingkreis 44 auf den zweiten Schwingkreis 46 übertragen werden kann. Der zweite Schwingkreist 46 ist vorteilhaft, aber der erste Schwingkreis 44 genügt für einen resonanten Betrieb, so dass beispielsweise auch lediglich eine Empfangsspule vorzugsweise mit Gleichrichter statt des zweiten Schwingkreises 46 eingesetzt werden kann. Eine vorzugsweise als Regler ausgestaltete Einstelleinheit 48 steuert den ersten Schwingkreis 44 mit einer Ansteuerungsfrequenz an. Die Energiequelle ist eine Versorgung 50 des Laserscanners 10 in der Sockeleinheit 14, die beispielsweise einerseits mit dem Stromnetz und andererseits direkt und/oder über die Einstelleinheit 48 mit dem ersten Schwingkreis 44 verbunden ist. Kenngrößen der Energieübertragung, insbesondere Spannung und Strom, werden in der Abtasteinheit 12 durch eine Messeinheit 52 bestimmt. Aus dem zweiten Schwingkreis 46 wird die Elektronik in der Abtasteinheit 12 versorgt, wie in Figur 1 durch eine Verbindung zu der Leiterkarte 36 angedeutet. Die genauere Funktion der Energieübertragungseinheit wird später unter Bezugnahme auf die Figur 2 weiter erläutert.

Zwischen der Sockeleinheit 14 und der Abtasteinheit 12 ist weiterhin eine drahtlose Datenübertragungseinheit 54a-b vorgesehen, die vorzugsweise bidirektional ist und deren genauere Funktionsweise auf an sich bekannter und hier nicht näher erläuterter Technologie beruht. Darüber kann eine in der Sockeleinheit 14 angeordnete Steuer- und Auswertungseinheit 56 mit der Elektronik in der Abtasteinheit 12 kommunizieren, beispielsweise mit deren Leiterkarte 36. Die Funktionalität der Steuer- und Auswertungseinheit 56 kann nahezu beliebig über die Sockeleinheit 14 und die Abtasteinheit 12 verteilt implementiert sein, also beispielsweise die Leiterkarte 36 Funktionen der Steuer- und Auswertungseinheit 56 übernehmen und umgekehrt. Die Steuer- und Auswertungseinheit 56 steuert den Lichtsender 22 und erhält das Empfangssignal des Lichtempfängers 34 zur weiteren Auswertung. Die Steuer- und Auswertungseinheit 56 steuert außerdem den Antrieb 16 und erhält das Signal einer nicht gezeigten, von Laserscannern allgemein bekannten Winkelmesseinheit, welche die jeweilige Winkelstellung der Abtasteinheit 12 bestimmt.

Zur Auswertung wird vorzugsweise mit einem Lichtlaufzeitverfahren die Distanz zu einem angetasteten Objekt gemessen. Die jeweilige Winkelstellung, unter welcher der Sendelichtstrahl 26 jeweils ausgesandt wurde, ist von der Winkelmesseinheit ebenfalls bekannt. Somit stehen nach jeder Scanperiode über den Winkel und die Entfernung zweidimensionale Polarkoordinaten aller Objektpunkte in einer Abtastebene zur Verfügung. Solche und andere Daten des Laserscanners 10 können an einem Ausgang 58 bereitgestellt werden.

Die drahtlose Datenübertragungseinheit 54a-b wird außerdem dafür genutzt, Energiedaten aus der Abtasteinheit 12, insbesondere der Messeinheit 52, der Einstelleinheit 48 mitzuteilen. In Figur 1 wird auch diese Kommunikation von der Steuer- und Auswertungseinheit 56 übernommen, alternativ wäre ein anderer, beispielsweise direkter Kommunikationsweg zu der Einstelleinheit 48 denkbar.

Wie schon zum konkreten Aufbau der Abtasteinheit 12 erwähnt, ist auch der Aufbau des Laserscanners 10 insgesamt beispielhaft zu verstehen. Alternativ zu dem gezeigten System mit nur einem Abtaststrahl 26, 30 ist auch ein mehrstrahliges System vorstellbar, das mehrere in Elevation beabstandete Abtastungen vornimmt. Denkbar wäre in einem Laserscanner 10 mit einer Abtastebene wie in einem Mehrebenenscanner eine zusätzliche Verkippung der Abtasteinheit 12 in Elevation zur Erfassung eines erweiterten dreidimensionalen Überwachungsbereichs 20.

Auch ein Laserscanner 10 an sich ist nur ein Beispiel für einen optoelektronischen Sensor mit um die Drehachse 18 beweglicher Abtasteinheit 12 und ruhender Sockeleinheit 14, in der die Energieübertragungseinheit eingesetzt werden kann. Die Erfindung ist auch nicht auf optoelektronische Sensoren beschränkt, sondern kann beispielsweise auch als Radar ausgestaltet sein. Der Grobaufbau ändert sich dadurch nicht. An die Stelle von Lichtsender 22 und Lichtempfänger 34 treten entsprechende Radarsender und Radarempfänger, und die Optiken werden weggelassen beziehungsweise durch ein Radom oder dergleichen ersetzt.

Figur 2 zeigt nochmals schematisch die drahtlose Energieübertragung. Dabei sind gleiche oder einander entsprechende Merkmale weiterhin mit den gleichen Bezugszeichen gekennzeichnet. Die Leiterkarte 36 steht weiterhin stellvertretend für eine Steuer- und Auswertungselektronik in der Abtasteinheit 12 und die Steuer- und Auswertungseinheit 56 für diejenige in der Sockeleinheit 14, wobei wie schon erwähnt die Funktionen unter Ausnutzung des Datenkanals 60 der drahtlosen Datenübertragungseinheit 54a-b einander ergänzen oder untereinander ausgetauscht werden können.

Die Einstelleinheit 48 umfasst hier noch einen Frequenzgenerator 62 und eine Treiberschaltung 64, um den ersten Schwingkreis 44 mit einer gewünschten Ansteuerfrequenz zu betreiben. Dies bildet die Primärseite einer resonanten Energieübertragung in der stationären Sockeleinheit 14. Auf der Sekundärseite in der beweglichen Abtasteinheit 12 ist dem zweiten Schwingkreis 46 noch ein Gleichrichter 66 nachgeordnet, und die Messeinheit 52 bestimmt dort den Strom und/oder die Spannung. Dies ist nur eine beispielhafte Umsetzung eines Systems zur resonanten, induktiven Energieübertragung. Es können alternativ zusätzliche Schwingkreise und andere unterstützende Elektronikkomponenten eingesetzt werden.

Somit wird der Datenkanal 60, der für die eigentliche Messung mit der Abtasteinheit 12 ohnehin benötigt wird, für den Austausch von Energiedaten mitbenutzt, d. h. Daten, mit denen die Einstelleinheit 48 die Energieübertragung steuern kann. Messwerte für die Eingangsspannung und den Eingangsstrom der Abtasteinheit 12 werden oft schon für Diagnose- und Überwachungszwecke bestimmt. Die Messeinheit 52 wäre dann ebenso wie der Datenkanal 60 bereits vorhanden und würde mitbenutzt. Die Energiedaten werden in den Datenstrom auf dem Datenkanal 60 zu der Sockeleinheit 14 verpackt und dort in der Einstelleinheit 48 zur Berechnung der notwendigen Übertragungsleistung beziehungsweise der dafür erforderlichen Ansteuerfrequenz herangezogen.

Eine schnelle und sehr genaue Ausregelung der belastungsabhängig schwankenden Spannung der Energieübertragung ist vorzugsweise nicht notwendig. Oft ist die maximal mögliche Spannung durch das Design der Abtasteinheit 12 ohnehin begrenzt, und es gibt nachfolgende Regler, die mit einem weiten Spannungsbereich umgehen können. Daher achtet die Einstelleinheit 48 in einer bevorzugten Ausführungsform als hartes Kriterium lediglich darauf, dass eine Mindesteingangsspannung für die Abtasteinheit 12 beziehungsweise deren Regler nicht unterschritten wird. Der optimale Arbeitspunkt kann zwischen dieser Mindesteingangsspannung und der maximal möglichen Leistungsübertragung liegen beziehungsweise eingeregelt werden.

Der Regelkreis für die drahtlose Energieübertragung hat typischerweise keine besonderen Anforderungen an Echtzeit oder Zykluszeit, dies kann durchaus im Sekundenbereich liegen, da sich in der Praxis der Leistungsbedarf der Abtasteinheit 12 nur langsam ändert. Damit kann die Regelung durch die Steuer- und Auswertungseinheit 56 beziehungsweise deren Mikrocontroller oder sonstige Bausteine mit erledigt werden. Die Einstelleinheit 48 ist dann lediglich ein kleiner Funktionsblock der Steuer- und Auswertungseinheit 56.

Schnelle Laständerungen durch Wechsel der Betriebsart, Zuschaltung von Messkanälen und dergleichen sind dem System meist im Voraus bekannt und können somit durch vorherige Anhebung der Übertragungsleistung auf ein zuverlässiges Mindestniveau abgefangen werden. Nach erfolgter Umschaltung kann dann wieder die Optimierung auf den neuen Betriebszustand erfolgen. Dabei wird vorzugsweise gerade nicht auf eine maximale Leistungsübertragung optimiert wie in herkömmlichen Anwendungen der resonanten Energieübertragung, sondern auf einen guten Wirkungsgrad, der die Mindestversorgung noch gewährleistet.

## Patentansprüche

1. Sensor (10), insbesondere Laserscanner oder Radar, zur Erfassung von Objekten in einem Überwachungsbereich (20), mit mindestens einem Sender (22) zum Aussenden eines Sendesignals (26), mindestens einem Empfänger (34) zum Erzeugen eines Empfangssignals aus dem von den Objekten zurückgeworfenen Sendesignal (30), einer Sockeleinheit (14), einer gegenüber der Sockeleinheit (14) um eine Drehachse (18) beweglichen Abtasteinheit (12) zur periodischen Abtastung des Überwachungsbereichs (20) sowie einer Steuer- und Auswertungseinheit (56) zur Erfassung von Informationen über die Objekte anhand des Empfangssignals, wobei zwischen Sockeleinheit (14) und Abtasteinheit (12) eine drahtlose Datenübertragungseinheit (54a-b) und eine drahtlose Energieübertragungseinheit (44, 46) mit einer Einstelleinheit (48) für die zu übertragende Energie vorgesehen ist,
**dadurch gekennzeichnet,**
**dass** die drahtlose Energieübertragungseinheit (44, 46) mindestens einen ersten Schwingkreis (44) in der Sockeleinheit (14) und mindestens eine Empfangsspule, insbesondere einen zweiten Schwingkreis (46), in der Abtasteinheit (12) zur resonanten Energieübertragung aufweist und dass die Einstelleinheit (48) mittels der drahtlosen Datenübertragungseinheit (54a-b) in Kommunikationsverbindung mit der Abtasteinheit (12) steht, um Energiedaten über die in der Abtasteinheit (12) verfügbare und/oder erforderliche übertragene Energie an die Einstelleinheit (48) zu übertragen und mit der Einstelleinheit (48) auf Basis der Energiedaten die Ansteuerfrequenz des ersten Schwingkreises (44) einzustellen.

2. Sensor (10) nach Anspruch 1,
wobei der Sender (22) als Lichtsender, der Empfänger (34) als Lichtempfänger und insbesondere der Sensor (10) als Mehrebenenscanner ausgebildet ist.

3. Sensor (10) nach Anspruch 1 oder 2,
wobei die Einstelleinheit (48) in der Sockeleinheit (14) angeordnet ist.

4. Sensor (10) nach einem der vorhergehenden Ansprüche,
wobei die Abtasteinheit (12) eine Messeinheit (52) für Kenngrößen der Energieübertragung aufweist und die Energiedaten wenigstens teilweise aus den Kenngrößen erzeugt sind.

5. Sensor (10) nach einem der vorhergehenden Ansprüche,
wobei die Einstelleinheit (48) als Regler ausgebildet ist, der die Ansteuerfrequenz anhand der Energiedaten regelt.

6. Sensor (10) nach einem der vorhergehenden Ansprüche,
wobei die Einstelleinheit (48) dafür ausgebildet ist, die Ansteuerfrequenz so einzustellen, dass eine Mindestversorgung der Abtasteinheit (12) gewährleistet ist.

7. Sensor (10) nach einem der vorhergehenden Ansprüche,
wobei die Einstelleinheit (48) dafür ausgebildet ist, die Ansteuerfrequenz für einen hohen Wirkungsgrad der Energieübertragung einzustellen.

8. Sensor (10) nach einem der vorhergehenden Ansprüche,
wobei die Einstelleinheit (48) für eine Anpassung der Ansteuerfrequenz in Zyklen von höchstens einigen Malen oder einmal pro Sekunde ausgebildet ist.

9. Sensor (10) nach einem der vorhergehenden Ansprüche,
wobei die Einstelleinheit (48) in einem digitalen Baustein der Steuer- und Auswertungseinheit (56) implementiert ist.

10. Sensor (10) nach einem der vorhergehenden Ansprüche,
wobei die Steuer- und Auswertungseinheit (56) dafür ausgebildet ist, der Einstelleinheit (48) einen Moduswechsel des Sensors (10) mitzuteilen, damit die Einstelleinheit (48) daraufhin die für den neuen Modus erforderliche Energie bereitstellt.

11. Verfahren zur Erfassung von Objekten in einem Überwachungsbereich (20), bei dem ein Sendesignal (26) ausgesandt, wieder empfangen, in ein Empfangssignal gewandelt und das Empfangssignal ausgewertet wird, um Informationen über die Objekte zu erfassen, wobei der Überwachungsbereich (20) durch Bewegung einer Abtasteinheit (12) gegenüber einer Sockeleinheit (14) um eine Drehachse (18) periodisch abgetastet wird und wobei zwischen Sockeleinheit (14) und Abtasteinheit (12) Daten und Energie drahtlos übertragen werden, **dadurch gekennzeichnet,**
**dass** die Energie resonant zwischen mindestens einem ersten Schwingkreis (44) in der Sockeleinheit (14) und mindestens einer Empfangsspule, insbesondere einem zweiten Schwingkreis (46), in der Abtasteinheit (12) übertragen wird, dass Energiedaten über die in der Abtasteinheit (12) verfügbare und/oder erforderliche übertragene Energie in die Sockeleinheit (14) übertragen werden und dass die Ansteuerfrequenz des ersten Schwingkreises (44) auf Basis der Energiedaten eingestellt wird.
